# EUROPÄISCHE PATENTSCHRIFT

(11) **EP 0 871 321 B1**
(45) Veröffentlichungstag und Bekanntmachung des Hinweises auf die Patenterteilung: **05.10.2005**
(21) Anmeldenummer: 97105703.9
(22) Anmeldetag: 07.04.1997
(51) Int. Cl.: H04N 1/203

(54) **Verfahren und Vorrichtung zum Aufzeichnen von Bildinformationen**
Method and apparatus for reproducing picture information
Procédé et appareil pour la reproduction d'information d'image

(43) Veröffentlichungstag der Anmeldung: 14.10.1998
(73) Patentinhaber: Agfa-Gevaert AG, 51373 Leverkusen (DE)
(72) Erfinder: Frick, Beat, 8107 Buchs (CH)

(56) Entgegenhaltungen:
- EP-A- 0 244 490
- GB-A- 2 085 580
- US-A- 5 323 181
- US-A- 5 532 731

## Beschreibung

Die Erfindung betrifft ein Verfahren zum Aufzeichnen von Bildinformationen auf in Form von einzelnen Blättern vorliegendes Aufzeichnungsmaterial gemäss dem Oberbegriff des unabhängigen Anspruchs 1 sowie eine entsprechende Vorrichtung gemäss dem Oberbegriff des unabhängigen Anspruchs 10. Insbesondere, aber nicht ausschliessend, befasst sich die Erfindung mit der Herstellung von fotografischen Kopien unter Verwendung eines fotografischen Einzelblatt-Printers mittlerer Leistungsfähigkeit, wie er typischerweise in kombinierten Kopier- und Entwicklungsgeräten - sog. MiniLabs - eingesetzt wird.

Bei einem typischen Vertreter solcher Einzelblatt-Printer werden Kopiermaterial-Blätter des gewünschten Formats sequentiell in die Belichtungsstation des Printers eingeführt, dort bildelementweise z.B. mittels einer Katodenstrahlröhre oder eines Laser-Belichters oder dgl. bildmässig belichtet und dann dem an den Printer anschliessenden Papierprozessor zugeführt. Die Belichtungsstation des Printers ist normalerweise an das grösste vorkommende Format der Kopiermaterial-Blätter angepasst, beispielsweise etwa 300 mm x 450 mm. Erfahrungsgemäss werden nun aber die grösseren Formate weniger häufig benötigt als die üblichen Standard-Formate, beispielsweise 100 mm x 150 mm.. Dies führt dazu, dass der Printer im Durchschnitt insgesamt mit einem weit geringeren Durchsatz arbeitet, als er aufgrund seiner Auslegung theoretisch eigentlich zu verkraften imstande wäre. Unter Durchsatz ist hier der flächenmässige Durchsatz zu verstehen, also die Gesamtfläche aller pro Bezugszeiteinheit belichteten Kopiermaterialblätter. Beispielsweise erreicht ein typisches Minilab mit einer Linienbelichtungseinheit und mit 300 mm Belichtungsbreite (erforderlich für die grossen Bildformate 300 mm x 450 mm) eine lineare Geschwindigkeit von ca. 25 mm/sec. Werden Prints der Standard-Grösse 100 mm x 150 mm in Längsrichtung belichtet, werden für einen Print 6 sec benötigt, was einer Leistung von 600 Prints pro Stunde entspricht. Diese vergleichsweise geringe Leistung ist für ein solches wegen seiner grossen Belichtungsbreite verhältnismässig kostspieliges Gerät unwirtschaftlich - marktgerecht wären Werte von etwa 1800 Prints pro Stunde und darüber.

Aus dem Stand der Technik ist die gleichzeitige Verarbeitung mit kleineren Bildformaten bekannt (US 5,532,731).

Bei einem Printer mit Linienbelichtungseinheit könnte der Durchsatz für kleinere Formate theoretisch durch eine Steigerung der Scan-Geschwindigkeit bei gleichzeitiger Anpassung der Papiergeschwindigkeit erhöht werden. Dies würde aber nur in diskreten Schritten möglich sein, mechanische Umschaltungen am Polygonspiegel erfordern, wesentlich höhere Präzision voraussetzen und keinen schnellen Wechsel zulassen. In der Praxis kommt diese Lösung daher nicht in Frage.

Das vorstehend anhand eines Einzelblatt-Printers z.B. eines Minilabs geschilderte Problem besteht sinngemäss auch bei anderen Aufzeichnungsvorrichtungen wie z.B. Druckern der unterschiedlichsten Technologien, die für blattförmiges Aufzeichnungsmaterial wechselnder Formate ausgelegt sind und bei kleineren Blattformaten ihre volle Leistungsfähigkeit nicht erreichen können.

Durch die vorliegende Erfindung soll nun diese Schwierigkeit überwunden und ein Verfahren zum Aufzeichnen von Bildinformationen der gattungsgemässen Art sowie die entsprechende Aufzeichnungsvorrichtung dahingehend verbessert werden, dass auch bei der Verarbeitung von kleineren Blattformaten ein höherer Durchsatz erreicht werden kann.

Die Lösung dieser der Erfindung zugrundeliegenden Aufgabe ergibt sich in ihrer allgemeinsten Form aus den im kennzeichnenden Teil des unabhängigen Anspruchs 1 bzw. des unabhängigen Anspruchs 10 beschriebenen Merkmalen. Besonders vorteilhafte Ausgestaltungen und Weiterbildungen sind Gegenstand der abhängigen Ansprüche 2-9 und 12-17.

Gemäss dem grundlegenden Gedanken der Erfindung werden also die Blätter des Aufzeichnungsmaterials in zwei oder mehreren parallelen Transportspuren zeitlich unabhängig der Aufzeichnungsstation zugeführt. Das Zuführen in mehreren Transportspuren hat den Vorteil, dass bei kleineren Blattformaten mehrere Blätter nebeneinander eingeführt und praktisch gleichzeitig beschrieben, d.h. mit den entsprechenden Bildinformationen beaufschlagt werden können. Grössere Blattformate belegen zwei oder mehrere Transportspuren. Bei geschickter Anordnung der einzelnen Blätter gleichen oder unterschiedlichen Formats lassen sich die nicht belegten Zwischenräume neben und zwischen aufeinanderfolgenden Blättern minimal halten Die Belegungsdichte innerhalb der Aufzeichnungsstation (Verhältnis der von den Blättern tatsächlich belegten Fläche zur maximal zur Verfügung stehenden Fläche) ist auf diese Weise wesentlich höher als bei konventionellen Verfahren, und entsprechend ist auch der Durchsatz wesentlich höher.

Wird die Erfindung im Printer eines Minilab eingesetzt, durch dessen Papierprozessor die belichteten Einzelblätter in der Regel ohnehin in mehreren parallelen Spuren geführt werden, so erspart man sich ausserdem die Querverteilung der belichteten Blätter nach dem Printer.

Im folgenden wird die Erfindung anhand eines erfindungsgemäss ausgebildeten digitalen Minilabs in Verbindung mit der Zeichnung näher erläutert. In dieser zeigen:
- Fig.1: eine schematische Gesamtansicht des erfindungsgemäss ausgebildeten Minilabs,
- Fig. 2: eine schematische Darstellung der wesentlichsten Komponenten des Printers des Minilabs,
- Fig. 3: eine schematische Skizze zur Erläuterung des Papierlaufs im Printer und
- Fig. 4: eine schematische Skizze zur Erläuterung der Organisation und Auslesung der Bildinformationsdaten.

Das dargestellte digitale Minilab umfasst äusserlich drei Hauptkomponenten, und zwar eine Printer-Papierprozessor-Einheit 100, eine Kopiervorlagen-Abtastvorrichtung (Film-Scanner) 200 und einen die Printer-Papierprozessor-Einheit 100 und die Abtastvorrichtung 200 verbindenden und steuernden Rechner 300.

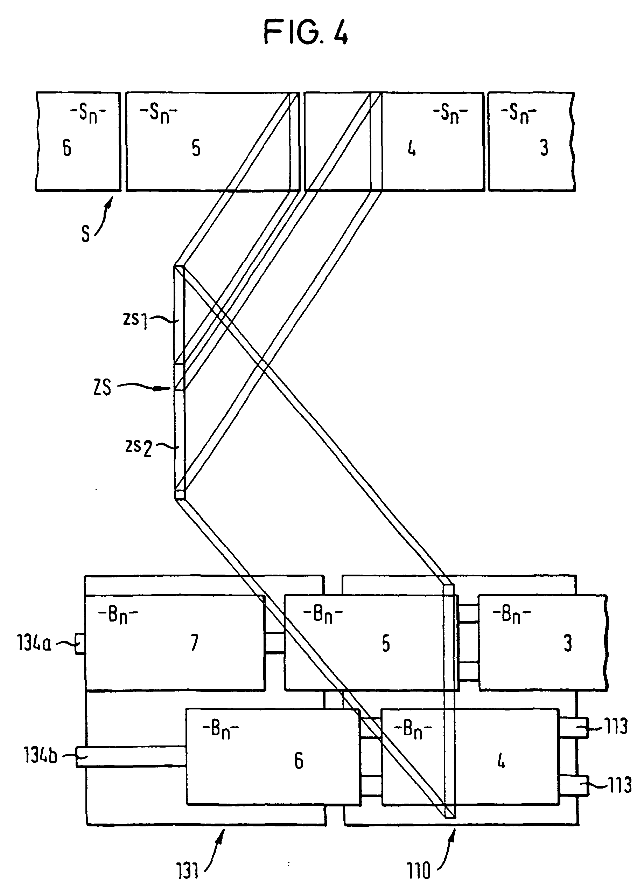

Die Abtastvorrichtung 200 tastet die einzelnen Bilder Vₙ eines Vorlagenstreifens V (üblicherweise Negativ-Film) in den drei Farbkanälen rot, blau und grün bildelementweise fotoelektrisch ab und speichert die Abtastdaten im Rechner 300. Dieser berechnet aus den Abtastdaten in an sich bekannter Weise entsprechende, auf den Printer in der Einheit 100 abgestimmte Belichtungsdaten für die von den Vorlagebildern Vₙ zu erstellenden Abzüge (Prints) Bₙ und legt diese in einem in ihm enthaltenen Bildinformationsspeicher S zur weiteren Verarbeitung bereit (Fig.4). Die gespeicherten Belichtungsdaten umfassen für jeden zu erstellenden Abzug (Print) für jedes einzelne Bildelement (Bildpunkt, Pixel) desselben einen Satz von normalerweise drei Belichtungswerten für die Farben rot, blau und grün und stellen somit eine digitale elektrische Repräsentation der Bildinhalte der zu erzeugenden Abzüge (Papierkopien, Prints) dar.

In Fig.4 sind die im Bildinformationsspeicher S enthaltenen Belichtungsdaten (allgemein Bildinformationen) als lineare Anreihung der zu den einzelnen Vorlagebildern Vₙ gehörenden Daten dargestellt. Für jedes herzustellende Bild (Print) Bₙ ist (bildlich gesehen) ein drei Ebenen umfassender matrixförmiger Speicherbereich Sₙ der Dimensionen Anzahl Bildelemente (Pixel) in Längsrichtung und Anzahl Bildelemente (Pixel) in Querrichtung des herzustellenden Bilds vorgesehen. Jeder Punkt der Matrix entspricht einem Bildelement (Pixel) des herzustellenden Prints und enthält in seinen drei Ebenen die drei Farbbelichtswerte für das betreffende Bildelement. Bei monochromen Bildern braucht die Matrix natürlich nur eine Ebene aufzuweisen. Die Abtastvorrichtung 200 und der Bildinformationsspeicher S entsprechen soweit voll und ganz dem Stand der Technik und bedürfen daher keiner näheren Erläuterung.

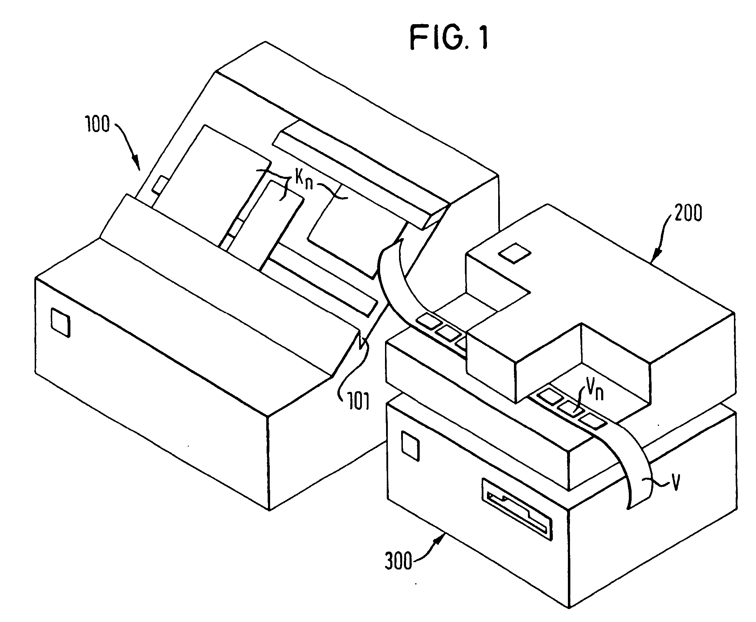

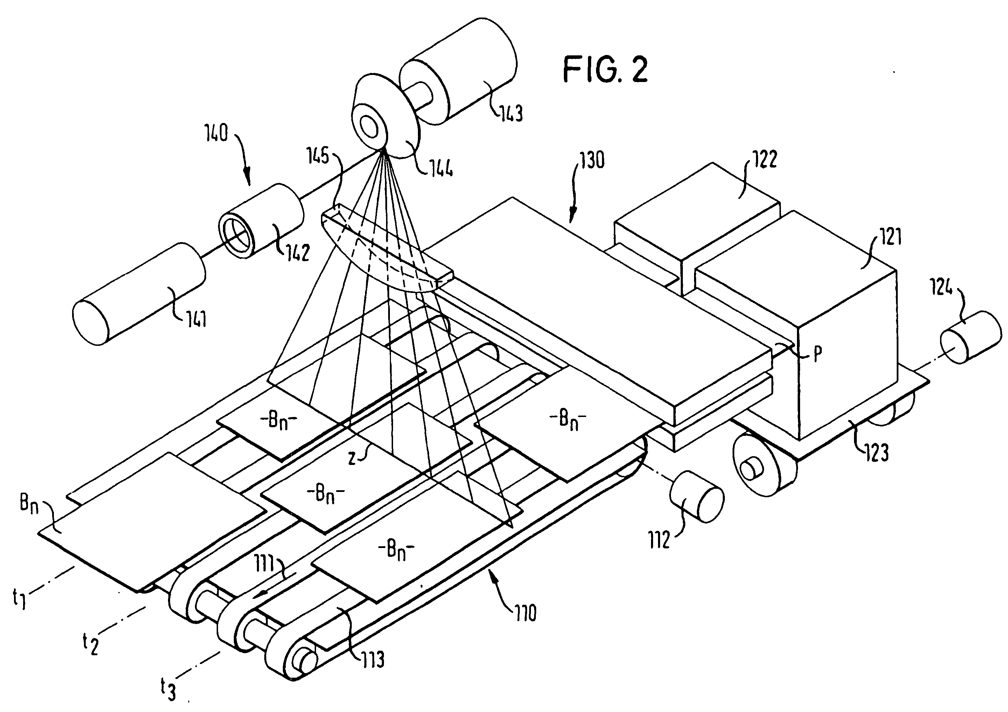

Die Printer-Papierprozessor-Einheit 100 umfasst einen fotografischen Printer und einen an diesen anschliessenden Papierprozessor, welche beide für die Verarbeitung von Einzelblättern ausgebildet sind. Der mit einer Linienbelichtungseinheit (Fig.2) ausgestattete Printer empfängt die im Bildinformationsspeicher S enthaltenen Belichtungsdaten vom Rechner 300 und belichtet ihm zugeführte einzelne Blätter fotografischen Kopiermaterials (Kopierpapier) entsprechend bildmässig. Die belichteten Einzelblätter werden dann in mehreren parallelen Spuren durch den Papierprozessor geführt und der üblichen nass-chemischen Behandlung unterworfen. Die fertig entwickelten Papierkopien Kₙ verlassen den Papierprozessor in der Reihenfolge ihrer Einspeisung in den Printer an der Vorderseite der Einheit 100 und gleiten in eine Sammelrinne 101, wo sie (in der Fig. 1 nach links) zu einem sortierten Stapel zusammengeschoben werden.

Die Printer-Papierprozessor-Einheit 100 entspricht in dieser Allgemeinheit in Aufbau und Funktionsweise ebenfalls vollumfänglich dem Stand der Technik, so dass sich soweit für den Fachmann eine nähere Erläuterung erübrigt. Die erfindungsgemässen Unterschiede, auf die sich folgende Beschreibung konzentriert, liegen in der speziellen Ausbildung des Printers und in der Art und Weise, wie der Printer die ihm zugeführten Belichtungsdaten auf die einzelnen Blätter des Kopiermaterials aufzeichnet.

Die erfindungswesentlichen Komponenten des Printers sind in Fig.2 etwas vereinfacht schematisch dargestellt. Er umfasst eine Papierbühne 110 mit einer Reihe von parallelen und synchron in Richtung des Pfeils 111 mittels eines Motors 112 angetriebenen Transportbändern 113, zwei Papierkassetten 121 und 122 mit Vorratsrollen verschieden breiten Kopierpapiers, eine Auszug-Puffer-Einheit 130 und ein Aufzeichnungsgerät in Form einer über der Papierbühne angeordneten Linienbelichtungseinheit 140.

Die beiden Papierkassetten 121 und 122 sind mittels eines Wagens 123 quer zur Bewegungsrichtung 113 der Transportbänder 113 und damit quer zur Papierbühne 110 verstellbar, der dazu erforderliche Antriebsmotor ist mit 124 bezeichnet.

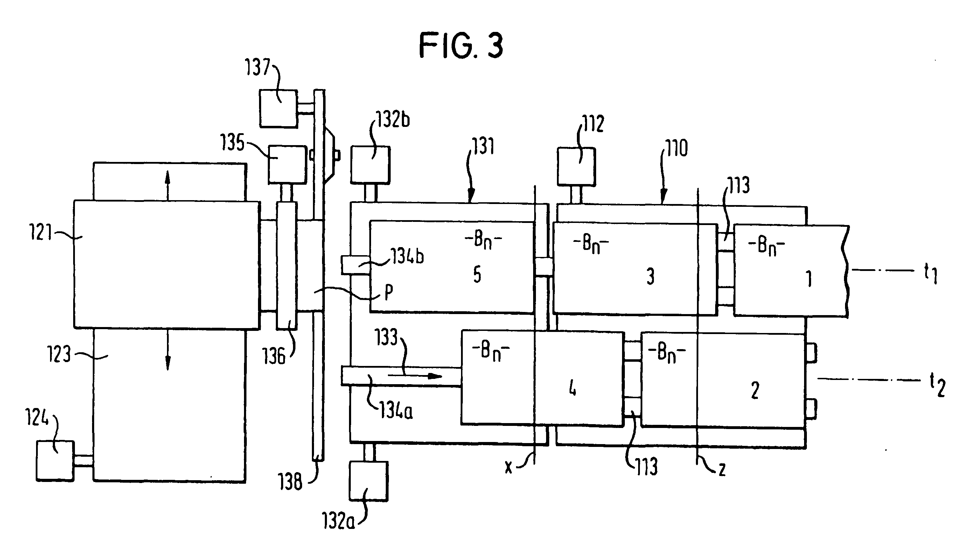

Die Auszug-Puffer-Einheit 130 umfasst (Fig.3) eine der Papierbühne 110 vorgeschaltete Puffer-Bühne 131 mit durch zwei unbahängige Motoren 132a und 132b in Richtung des Pfeils 133 angetriebenen Transportbändern 134a und 134b, zwei je einer Papierkassette 121 bzw. 122 zugeordnete und mit diesen mit quer verschiebbare, durch je einen Motor 135 angetriebene Auszugspollenpaare 136 (in Fig.3 ist nur eine Papierkassette und ein Auszugsrollenpaar dargestellt) und ein durch einen Motor 137 oder einen Hubmagneten angetriebenes Papiermesser 138, welches sich über die gesamte Breite der Papierbühne 110 erstreckt.

Im dargestellten Ausführungsbeispiel wird als Aufzeichnungsgerät eine Linienbelichtungseinheit 140 eingesetzt, welche mit drei farbigen Lasern als Lichtquellen ausgestattet ist. Es versteht sich, dass aber auch jede andere Linienbelichtungseinheit, die in der Lage ist, eine linien- oder streifenförmige Belichtung durchzuführen, eingesetzt werden kann. Als Beispiel sei eine Katodenstrahlbelichtungseinheit angeführt. Wie weiter unten noch näher ausgeführt ist, kann die Aufzeichnung der Information aber auch mittels anderer Technologien erfolgen, beispielsweise etwa mittels eines Tintenstrahldruckers. Anhand der mit Laserlichtquellen ausgestatteten Linienbelichtungseinheit 140 lässt sich die Erfindung jedoch besonders gut verdeutlichen.

Die Linienbelichtungseinheit 140 (Fig.2) umfasst drei Laserlichtquellen 141 für die drei Farben blau, rot und grün, drei akkusto-optische Modulatoren 142 für die drei Laserstrahlen, einen durch einen Motor 143 angetriebenen rotierenden Polygonspiegel 144 und eine F-Theta-Linse 145. In der Zeichnung sind der Einfachheit halber jeweils nur eine Laserlichtquelle und ein Modulator dargestellt. Mittels des rotierenden Polygonspiegels 144 wird der Auftreffpunkt der drei Laserstrahlen auf der Papierbühne bzw. dem darauf befindlichen Blattmaterial in rascher Folge quer über die gesamte Belichtungsbreite der Papierbühne geführt (Scan). In der Fig.2 ist der Laserstrahl (eigentlich die zusammengeführten drei farbigen Laserstrahlen) vom Polygonspiegel zum Kopierpapier zu verschiedenen Zeitpunkten eines Scans eingezeichnet. Die örtliche Belichtung des Kopierpapiers und damit die resultierende, nach der Entwicklung sichtbare optische Dichte auf dem Kopierpapier wird über die zeitliche Modulation der drei Laserstrahlen durch die drei Modulatoren steuern. Die drei Modulatoren 142 werden von je einem analogen Farbauszug-Bildsignal angesteuert (vergleichbar einem Videosignal bei einer Fersehröhre), welches durch Digital/Analog-Wandlung aus den digitalen Belichtungsdaten im Bildinformationsspeicher S des Rechners 300 erzeugt wird. Die Laserbelichtungseinheit 140 zeichnet bei jedem Scan eine einzelne Bildzeile z auf, deren Länge der maximalen Belichtungsbreite der Papierbühne 110 und deren Breite (Dicke) der Abmessung eines Bildelements (Pixels) in Längsrichtung (Papiertransportrichtung) entspricht. Die zweite Dimension des aufzuzeichnenden Bilds wird durch den Vorschub der Blätter des Kopierpapiers erreicht. Für ein qualitativ befriedigendes Bild wird typischerweise eine Auflösung von 200-300 dpi (dots per inch, Bildelemente pro Zoll) verlangt, was bei einer maximalen Belichtungsbreite von 300 mm 2400-3600 Bildelementen (Pixel) pro Bildzeile z entspricht. Die lineare Abmessung eines üblicherweise im wesentlichen kreisförmigen Bildelements beträgt damit also rund 0,085 - 0,13 mm. Aufbau, Ansteuerung und Funktionsweise der Linienbelichtungseinheit 140 sind soweit an sich bekannt und bedürfen daher keiner näheren Erläuterung.

Sämtliche Komponenten des Printers, insbesondere also die Linienbelichtungseinheit, Antriebsmotoren etc., stehen mit dem Rechner 300 in Verbindung und werden von diesem gesteuert. Die Verbindungsleitungen zum Rechner sind der Übersichtlichkeit halber nicht dargestellt. Selbstverständlich könnte der Printer bzw. die Printer-Papierprozessor-Einheit 100 als Ganze auch mit einem eigenen Steuerrechner versehen sein, wobei in diesem Fall eine Datenschnittstelle vorhanden wäre, über die dem Printer die im Rechner 300 gespeicherten (oder ev. auch von einer anderen Datenquelle stammenden) Bildinformationen zugeführt würden.

Ein wesentliches Charakteristikum der Erfindung besteht darin, wie sich aus den Figuren 2-4 gut erkennen lässt, dass die zu belichtetenden (allgemein mit Bildinformationen zu beschreibenden) einzelnen Blätter Bₙ (hier) des Photopapiers P nicht in einer einzigen (insbesondere mittigen) Bewegungsspur hintereinander durch den Printer (allgemein die Aufzeichnungsstation) geführt werden, sondern dass die einzelnen Blätter je nach ihrem Format auf zwei oder mehrere nebeneinander liegende Transportspuren verteilt werden, so dass bei kleineren Formaten zwei oder mehrere Blätter (mit Versatz in Längsrichtung) nebeneinander zu liegen kommen und vom Lichtstrahl teilweise jeweils im selben Scan beschrieben werden. In Fig.2 sind drei solche Transportspuren t₁, t₂ und t₃ erkennbar, in den Figuren 3 und 4 sind der Übersichtlichkeit halber nur zwei Transportspuren t₁ und t₂ eingezeichnet.

Die Sequenz der einzelnen Blätter Bₙ und deren jeweilige Formate ergeben sich aus dem durchzuführenden Print-Job, also den zu einem Vorlagen-Film gehörenden Auftragsdaten (Kopien-Anzahl und Format zu jedem Vorlagen-Bild Vₙ). Diese Auftragsdaten werden dem Rechner 300 in an sich bekannter Weise eingegeben. Auf der Grundlage dieser Daten wird nun gesteuert vom Rechner 300 für jede zu erstellende Papierkopie die Papierkassette 121 bzw. 122 mit der passenden Papierbreite ausgewählt, mittels des der Papierkassette zugeordneten Auszugrollenpaars 136 und des Papiermessers 138 ein Blatt Bₙ der erforderlichen Länge ausgezogen und abgeschnitten, das Blatt auf die Puffer-Bühne 131 aufgegeben und dort mit seiner vorlaufenden Kante bis zu einer definierten Startposition x vorgeschoben. Dann wird das Blatt Bₙ den Transportbändern 113 der Papier-Bühne 110 übergeben und von diesen mit einer konstanten Geschwindigkeit von z.B. 25 mm/sec unter der Linienbelichtungseinheit 140 hindurch zum Papierprozessor transportiert, welcher die Blätter in unveränderter Reihenfolge und gegenseitiger Anordnung übernimmt. Während des Transports unter der Linienbelichtungseinheit 140 hindurch werden die Blätter zeilenweise beschrieben. Die Linienbelichtungseinheit 140 führt beispielsweise 250 Scans pro Sekunde durch, was bei der genannten Transportgeschwindigkeit von ca. 25 mm/sec eine Auflösung in Transportrichtung von 250 dpi (Bildelemente pro Zoll) ergibt.

Die Pufferbühne 131 ist im dargestelleten Ausführungsbeispiel mit zwei unabhängig angetriebenen Transportbändern 134a und 134b ausgestattet. Dies erlaubt den Vorschub der Blätter entkoppelt vom Transport auf der Papierbühne 110 und mit unterschiedlichen Geschwindigkeiten, je nach dem, ob sie gerade von den Auszugsrollen 136 übernommen werden (hohe Geschwindigkeit) oder an die Papierbühne 110 abgegeben werden (vergleichsweise niedrige Geschwindigkeit, synchron mit Transport auf der Papierbühne). Selbstverständlich können bei breiteren Bühnen auch mehrere unabhängige Antriebe für die Blätter in der Puffer-Bühne vorgesehen sein.

Die Verteilung der einzelnen Blätter Bₙ auf die einzelnen Transportspuren der Papierbühne 110 kann nach verschiedenen Strategien vorgenommen werden. Im allgemeinen wird man danach trachten, die Anordnung der einzelnen Blätter so kompakt wie möglich zu wählen, um den zur Verfügung stehenden Platz optimal auszunutzen und damit die Durchsatzleistung des Printers (und gleichzeitig des nachfolgenden Papierprozessors) zu maximieren. Man wird das nächste Blatt also vorzugsweise immer in diejenige Transportspur legen, wo gerade der meiste Platz zur Verfügung steht, das in der Spur vorhergehende Blatt also schon am weitesten vorne ist. Im Beispiel der Fig.3 gelangt also das Blatt mit der Nummer 4 nicht in die Spur t₁ hinter das Blatt mit der Nummer 3, sondern in die Spur t₂ hinter das Blatt mit der Nummer 4. Im Hinblick auf die beim Verlassen des Prozessors übliche Sortierung nach den vorlaufenden Kanten der einzelnen Blätter muss allerdings die Anordnung so getroffen werden, dass die vorlaufenden Kanten der in der Einlaufreihenfolge aufeinanderfolgenden Blätter jeweils um mindestens einen systembedingten Sortierabstand auseinander liegen. Analoge Überlegungen gelten für eine Ausrichtung auf die ebenfalls gebräuchliche Sortierung nach den nachlaufenden Kanten der einzelnen Blätter. Die Querverteilung der einzelnen Blätter auf die verschiedenen Transportspuren erfolgt durch entsprechendes Querverstellen der Papierkassette(n) 121 bzw. 122. Die Verteilung und Positionierung der Blätter auf der Papierbühne 110 wird durch den Rechner 330 gesteuert. Der Rechner ist somit stets informiert, wo sich welches Blatt in einem bestimmten Moment befindet. Insbesondere ist es dem Rechner bekannt, welches Blatt bzw. welche Blätter sich in welcher Längsposition relativ zur Längsposition der Belichtungszeile z befindet bzw. befinden.

Im gezeigten Ausführungsbeispiel ist die Querverteilung der einzelnen Blätter der Einfachheit halber durch entsprechendes Querverstellen der Papierkassetten dargestellt. In der Praxis wird man dazu aber eher einen Querverteiler einsetzen, wie er üblicherweise bei mehrbahnigen Papierprozessoren verwendet wird. Diesem Querverteiler werden einzelne Blätter aus den dann feststehenden Papierkassetten zugeführt. Er bewegt die einzelnen Blätter mittels eines geeigneten Transportmechanismus, üblicherweise Transportbänder, in die gewünschte Querposition und fördert die Blätter dann in die betreffende Transportspur der Puffer-Bühne weiter.

In Fig.3 wurde das Blatt Nr. 5 kurz vorher ausgezogen, abgelängt, der Puffer-Bühne übergeben und mit hoher Geschwindigkeit in die Startposition x transportiert. Das Blatt Nummer 4 wird gerade der Papierbühne übergeben. Die Blätter Nummer 3 und 2 werden gerade belichtet, und das Blatt Nr. 1 verlässt die Papierbühne gerade in Richtung des nachfolgenden Papierprozessors. Wenn ein Blatt die Startposition x erreicht hat, wird es synchron mit dem Transport in der Papierbühne auf diese übergeben. Da der Abstand zwischen der Startposition x und der Position der Belichtungszeile z vorgegeben ist, ergibt sich bei konstanter Transportgeschwindigkeit auf der Papierbühne automatisch der zeitliche Versatz, d.h. der Rechner 300 kann daraus bestimmen, wann die vorlaufende Kante des Blatts die Belichtungszeile erreicht und die Belichtung dieses Blatts beginnt.

Beim erfindungsgemässen Verfahren erfolgt die Aufzeichnung der Bildinformationen auf die einzelnen Blätter in aufeinanderfolgenden Teilaufzeichnungsschritten, bei denen im erläuterten Beispiel jeweils eine einzige Bildzeile - ein streifenförmiger Teilbildbereich der in Transportrichtung der Blätter gemessenen Ausdehnung von einem einzigen Bildelement - abgearbeitet wird. Wie aus den Figuren 2-4 deutlich wird, können beim erfindungsgemässen Verfahren je nach Anordnungsverteilung der einzelnen Blätter auf den einzelnen Transportspuren zeitweise zwei oder mehrere Blätter gleichzeitig belichtet werden. Dies erfordert eine spezielle Organisation der Belichtungsdaten (allgemein Bildinformationen), welche anhand der Fig.4 für das einfache Beispiel von zwei nebeneinander liegenden, gleichzeitig zu belichtenden Blättern erläutert wird.

Die Belichtungsdaten der einzelnen zu erstellenden Papierkopien sind, wie schon erwähnt, im Bildinformationsspeicher S des Rechners 300 als lineare Anreihung von Matrizen mit drei Ebenen (für die einzelnen Farbe) abgelegt. Die Dimensionen der Matrizen entsprechen der gewünschten Auflösung der herzustellenden Kopien, so dass schliesslich jeder Matrix-Punkt einem Bildelement der herzustellenden Papierkopie entspricht.

Die Bildinformationsdaten der aktuell zu belichtenden Bildzeile (welche über mehrere unterschiedliche Blätter unterschiedlichen Bildinhalts gehen kann) werden in einem Zeilenspeicher ZS abgelegt. Die "Länge" des Zeilenspeichers ZS ist gegeben durch die totale Anzahl von Bildelementen, die die Linienbelichtungseinheit 140 in einem Scan aufzeichnen kann - beispielsweise also 2400 -3600. Bei farbigen Kopien sind drei solche Zeilenspeicher ZS vorhanden, die ihre Daten aus je einer der drei Ebenen des Bildinfomationsspeichers S beziehen. Der Übersichtlichkeit halber ist in Fig.4 jedoch nur ein solcher Zeilenspeicher ZS dargestellt. Der Inhalt des bzw. der Zeilenspeicher ZS setzt sich aus den Bilddaten von (hier) zwei Bildern zusammen, im gezeigten Beispiel sind dies die Bilder Nr. 4 und 5. Diejenigen Daten des Zeilenspeichers ZS, die zu nicht von Kopierpapierblättern abgedeckten Stellen der Belichtungszeile z gehören (z.B. Zwischenräume), sind vorteilhaft auf null (schwarz) gesetzt.

Nach dem Positionieren eines Blatts (hier im Beispiel dasjenige, welches das Bild Nr. 5 aufbelichtet erhalten soll) in der Startposition x wird ein dem betreffenden Blatt zugeordneter Zähler auf einen Wert gesetzt, der in Einheiten des Blattvorschubs zwischen zwei Scans dem bekannten Abstand zwischen der Startposition x und der Position der Belichtungszeile z entspricht. Bei einem Abstand von 250 mm und einem Vorschub von 0,1 mm pro Scan entsprechend 250 dpi wäre der Startwert also 2500. Der Zähler wird nun im Takt der Scans dekrementiert. Erreicht der Zähler den Wert 0, so befindet sich das betreffende Blatt einen Schritt vor der Belichtungsposition. Nun wird die erste Datenzeile des Bilds Nr. 5 aus dem Bildinformationsspeicher S in den Zeilenspeicher ZS übertragen und diese Daten werden beim nächsten Scan auf das dann in Belichtungsposition befindliche zugehörige Blatt aufbelichtet. Für die folgenden Scans werden die Belichtungsdaten von Bild Nr. 5 Zeile für Zeile aus dem Speicher S in den Zeilenspeicher ZS übertragen und es werden solange Daten auf das zugehörige Blatt aufbelichtet, wie Daten im Speicher für dieses Bild vorhanden sind.

Da das Blatt, auf welches die Belichtungsdaten von Bild 5 aufbelichtet werden sollen, in der (in der Zeichnung) oberen Hälfte (Transportspur t1) des Papierpfads plaziert wurde, werden die Daten in die dieser Spur zugeordnete obere (erste) Hälfte zs₁ des Zeilenspeichers ZS geschrieben. Die Startadresse (Zuordnung zwischen Transportspuren und Bereichen des Zeilenspeichers) wird vorzugsweise durch Eintesten ermittelt.

Analog zum anhand von Bild Nr. 5 beschriebenen Vorgehen werden auch die Belichtungsdaten des Bilds Nr. 4 unter Steuerung durch einen dem Bild zugeordneten Zähler in (die untere Hälfte zs₂) des Zeilenspeicher geschrieben und auf das zugeordnete Blatt aufbelichtet. Vor dem Kopieren der Daten in den Zeilenspeicher wird dieser jeweils mit null (schwarz) initialisiert, so dass Blattzwischenräume etc. nicht belichtet werden.

Für alle übrigen Bilder wird sinngemäss verfahren.

Vorstehend wurde die Erfindung anhand eines fotografischen Minilabs erläutert, welches mit einem Aufzeichnungsgerät in Form einer zeilenweise arbeitenden Laserbelichtungseinheit ausgestattet ist. Wie schon weiter vorne erwähnt, ist aber die Erfindung selbstverständlich nicht auf Laserbelichtungseinheiten oder zeilenweises Arbeiten beschränkt. Beispielsweise können mittels geeigneter Aufzeichnungsgeräte durchaus auch breitere streifenförmige Teilbereiche, die sich quer über die gesamte Aufzeichnungsbreite der Aufzeichnungsstation erstrecken, mit Bildinformation beaufschlagt werden. Ausserdem brauchen die einzelnen Blätter während der einzelnen Teilaufzeichnungsschritte nicht unbedingt kontinuierlich bewegt zu werden. Es ist vielmehr auch möglich, die Blätter intermittierend zu bewegen, das heisst für jeden Teilaufzeichnungsschritt anzuhalten. Es ist ferner auch möglich, die einzelnen Blätter nicht über die volle Fläche zu belichten, um so einen unbelichteten Rand zu erzeugen, oder die Blätter etwas über ihre Kanten hinaus zu belichten, um geringfügige Positionierungstoleranzen auszugleichen; letzteres ist die bevorzugte Vorgehensweise.

Ferner ist die Erfindung nicht auf das fotografische Aufbelichten von Bildinformation mittels eines scannenden (abtastenden) Linienbelichtungsgeräts beschränkt. Eine fotografische Aufbelichtung ist beispielsweise auch mittels ein- oder zweidimensionaler Anordnungen von lichtemittierenden Elementen oder mittels einer Katodenstrahlröhre möglich.

Des weiteren ist die Erfindung nicht auf fotografische Verfahren beschränkt. Beispielsweise kann die Aufzeichnung von Bildinformationen auch mittels Tintenstrahl-, Bubble-Jet-, Solid-Ink-, Thermo-Transfer- und Thermo-Sublimationsverfahren erfolgen, ja selbst Nadeldrucker können nach dem erfindungsgemässen Verfahren betrieben werden. In diesem Sinne sind die vorstehend verwendeten, sich auf eine Aufzeichnung durch Aufbelichten beziehenden Ausdrücke, beispielsweise etwa "Belichtungsdaten", "Belichtungsrechner", "Belichtungsgerät" etc., allgemeiner und technologie-neutral zu verstehen, also ganz generell im Sinn von "Bildinformationen", "Bildinformationsrechner", "Aufzeichnungsgerät" etc..

Schliesslich ist die Erfindung nicht darauf beschränkt, dass die aufzuzeichnenden Bildinformationen von einem Film-Abtaster stammen. Als aufzuzeichnende Bildinformationen können beispielsweise auch Bilddaten verwendet werden, welche aus anderen Quellen stammen, beispielsweise etwa von anderen Scannern, Grafik-Daten von auf Rechnern erzeugten Grafiken, etc. etc.. Die erfindungsgemässe Aufzeichnungsvorrichtung kann auch als Kopiergerät ausgebildet und eingesetzt werden. Die Bildinformationen können dem Rechner 300 auch mittels eines beliebigen Datenträgermediums zugeführt werden, sofern der Rechner zum Lesen dieses Mediums ausgebildet ist. Demzufolge kann die erfindungsgemässe Aufzeichnungsvorrichtung auch als Bild-Ausgabegerät für einen Rechner ausgebildet sein, wobei Bild im weitesten Sinn zu verstehen ist, also jede optische Information mit umfasst.

## Patentansprüche

1. Verfahren zum Aufzeichnen von Bildinformationen auf in Form von einzelnen Blättern (Bₙ) vorliegendes Aufzeichnungsmaterial, wobei die aufzuzeichnenden Bildinformationen (Sₙ) für jedes Blatt in bildelementweise elektronisch gespeicherter Form vorliegen und bildelementweise auf das Aufzeichnungsmaterial aufgezeichnet werden, wobei die Blätter (Bₙ) des Aufzeichnungsmaterials in wenigstens zwei nebeneinander liegenden Spuren (t₁,t₂) auf einem Transporband (113) durch eine Aufzeichnungsstation (110,140) transportiert werden, und die zu den jeweils in der Aufzeichnungsstation befindlichen Blättern (Bₙ) gehörenden gespeicherten Bildinformationen (Sₙ) auf die in den nebeneinander liegenden Spuren (t₁,t₂) befindlichen Blätter (Bₙ) aufgezeichnet werden, **dadurch gekennzeichnet, dass** die Blätter (Bₙ) auf den wenigstens zwei nebeneinander liegenden Spuren (t₁,t₂) dem Transportband (113) zeitlich von einander unabhängig zugeführt werden.

2. Verfahren nach Anspruch 1, **dadurch gekennzeichnet, dass** die Aufzeichnung der Bildinformationen (Sₙ) in aufeinanderfolgenden Teilaufzeichnungsschritten erfolgt, wobei bei jedem Teilaufzeichnungsschritt die zu streifenförmigen Teilbereichen der Blätter (Bₙ) gehörenden Bildinformationen (Sₙ) auf die in den nebeneinander liegenden Spuren befindlichen Blätter (Bₙ) aufgezeichnet werden, welche streifenförmigen Teilbereiche quer zur Transportrichtung der Blätter (Bₙ) gemessen im wesentlichen gleich breit sind wie die jeweiligen Blätter (Bₙ) und welche Teilbereiche eine in Transportrichtung der Blätter gemessene Ausdehnung von der Ausdehnung mindestens eines Bildelements aufweisen.

3. Verfahren nach Anspruch 2, **dadurch gekennzeichnet, dass** die in den nebeneinander liegenden Spuren befindlichen Blätter (Bₙ) in der Aufzeichnungsstation (110,140) nach den Teilaufzeichnungsschritten oder während derselben um die Länge der Teilbereiche weitertransportiert werden.

4. Verfahren nach Anspruch 3, **dadurch gekennzeichnet, dass** in jedem Teilaufzeichnungsschritt jeweils linienförmige Teilbereiche mit einer in Transportrichtung gemessenen Ausdehnung von der Ausdehnung eines einzigen Bildelements aufgezeichnet werden, wobei die linienförmigen Teilbereiche in einer geraden Linie (z) verlaufen.

5. Verfahren nach einem der Ansprüche 2-4, **dadurch gekennzeichnet, dass** die Aufzeichnung der Bildinformationen auf die streifenförmigen Teilbereiche der in der Aufzeichnungsstation (110,140) in den nebeneinander liegenden Spuren (t₁,t₂) befindlichen Blätter (Bₙ) simultan oder sequentiell erfolgt.

6. Verfahren nach einem der vorangehenden Ansprüche, **dadurch gekennzeichnet, dass** das blattförmige Aufzeichnungsmaterial fotografisches Material ist und dass die Aufzeichnung durch bildelementweise Belichtung der Blätter (Bₙ) erfolgt.

7. Verfahren nach Anspruch 6, **dadurch gekennzeichnet, dass** zur Herstellung von fotografischen Kopien von Kopiervorlagen die letzteren bildelementweise fotoelektrisch abgetastet werden, dass aus den dabei ermittelten Abtastwerten für jede Kopiervorlage bildelementweise Belichtungsdaten (Sₙ) errechnet und gespeichert werden, welche Belichtungsdaten eine digitale Repräsentation der von den Kopiervorlagen zu erstellenden Kopien darstellen, und dass diese gespeicherten Belichtungsdaten als Bildinformationen auf die einzelnen Blätter (Bₙ) des fotografischen Aufzeichnungsmaterials aufbelichtet werden.

8. Verfahren nach Anspruch 7, **dadurch gekennzeichnet, dass** die Blätter (Bₙ) des fotografischen Aufzeichnungsmaterials unterschiedliche Formate aufweisen und vor der Aufzeichnungsstation (110,140) so auf die Spuren (t₁,t₂) verteilt werden, dass sie sich je nach quer zur Transportrichtung gemessener Breite in einer, zwei oder mehreren Spuren (t₁,t₂) befinden.

9. Verfahren nach Anspruch 8, **dadurch gekennzeichnet, dass** die Blätter (Bₙ) des fotografischen Aufzeichnungsmaterials so auf die Spuren (t₁,t₂) verteilt werden, dass der nicht belegte Leerraum neben und zwischen den einzelnen Blättern minimal ist.

10. Vorrichtung zum Aufzeichnen von Bildinformationen auf in Form von einzelnen Blättern (Bₙ) vorliegendes Aufzeichnungsmaterial, mit einer Aufzeichnungsstation (110,140), in welcher die Bildinformationen auf die Blätter aufgezeichnet werden, mit einer Transporteinrichtung (111-113), um die Blätter (Bₙ) durch die Aufzeichnungsstation (110,140) zu transportieren, mit einem Bildinformationsspeicher (S), in welchem die auf die Blätter aufzuzeichnenden Bildinformationen (Sₙ) für jedes einzelne Blatt bildelementweise elektronisch gespeichert vorliegen, mit einem in der Aufzeichnungsstation befindlichen Aufzeichnungsgerät (140), welches die Bildinformationen aus dem Bildinformationsspeicher (S) ausliest und auf die Blätter des Aufzeichnungsmaterials aufzeichnet, wobei die Transporteinrichtung (111-113) mindestens zwei nebeneinander liegende Spuren (t₁,t₂) sowie eine Verteileinrichtung (123,124) zum verteilten Anordnen der Blätter (Bₙ) auf diese Spuren aufweist, und das Aufzeichnungsgerät (140) die gespeicherten Bildinformationen (Sₙ) in der der Blattanordnung in den Spuren entsprechenden Zuordnung aus dem Bildinformationsspeicher (S) ausliest und alle in der Aufzeichnungsstation (110,140) in den nebeneinander liegenden Spuren (t₁,t₂) befindlichen Blatter (Bₙ) mit den ausgelesenen BildInformationen beaufschlagt **dadurch gekennzeichnet, dass** die Blätter (Bn) auf den wenigstens zwei nebeineinanderliegenden Spuren der Transporteinrichtung (111-113) zeitlich von einander unabhängig zugeführt werden:

11. Vorrichtung nach Anspruch 10, **dadurch gekennzeichnet, dass** das Aufzeichnungsgerät (110,140) die Bildinformationen (Sₙ) in aufeinanderfolgenden Teilaufzeichnungsschritten auf die Blätter (Bₙ) aufzeichnet und dabei jeweils streifenförmige Teilbereiche der Blätter (Bₙ) beaufschlagt, welche streifenförmigen Teilbereiche quer zur Transportrichtung der Blätter (Bₙ) gemessen im wesentlichen gleich breit sind wie die jeweiligen Blätter (Bₙ) und welche Teilbereiche eine in Transportrichtung der Blätter gemessene Länge von der Ausdehnung mindestens eines Bildelements aufweisen, und wobei das Aufzeichnungsgerät (110,140) bei jedem Teilaufzeichnungsschritt die zu den streifenförmigen Teilbereichen der auf den Spuren nebeneinander liegenden Blätter (Bₙ) gehörenden Bildinformationen (Sₙ) simultan oder sequentiell auf die betreffenden Blätter (Bₙ) aufzeichnet.

12. Vorrichtung nach Anspruch 11, **dadurch gekennzeichnet, dass** die Transporteinrichtung (111-113) die in den nebeneinander liegenden Spuren (t₁,t₂) befindlichen Blätter (Bₙ) in der Aufzeichnungsstation (110,140) nach den Teilaufzeichnungsschritten oder während derselben um die Länge der Teilbereiche weitertransportiert.

13. Vorrichtung nach einem der Ansprüche 10-12, **dadurch gekennzeichnet, dass** die Verteileinrichtung (123,124) die Blätter (Bₙ) des Aufzeichnungsmaterials so auf die Spuren (t₁,t₂) der Transportvorrichtung (111-113) verteilt, dass der nicht belegte Leerraum neben und zwischen den einzelnen Blättern minimal ist.

14. Vorrichtung nach einem der Ansprüche 10-13, **dadurch gekennzeichnet, dass** eine Abtastvorrichtung (200) zur bildelementweisen fotoelektrischen Abtastung von Kopiervorlagen sowie ein Bildinformationsrechner (300) vorgesehen sind, welcher aus den von der Abtastvorrichtung ermittelten Abtastwerten für jede Kopiervorlage bildelementweise Bildinformationsdaten (Sₙ) errechnet und im Bildinformationsspeicher (S) als digitale Repräsentation von von den Kopiervorlagen zu erstellenden Kopien abspeichert, und dass das Aufzeichnungsgerät (140) zur Herstellung von Kopien der Kopiervorlagen diese gespeicherten Bildinformationsdaten (Sₙ) als Bildinformationen auf die einzelnen Blätter (Bₙ) des Aufzeichnungsmaterials aufzeichnet.

15. Vorrichtung nach einem der Ansprüche 10-14, **dadurch gekennzeichnet, dass** das Aufzeichnungsgerät ein insbesondere zeilenweise arbeitendes fotografisches Belichtungsgerät, speziell ein Laserbelichtungsgerät (140) ist.

16. Vorrichtung nach einem der Ansprüche 10-14, **dadurch gekennzeichnet, dass** das Aufzeichnungsgerät ein Katodenstrahlröhrenbelichtungsgerät oder ein Belichtungsgerät mit einem Feld von lichtemittierenden Elementen ist.

17. Vorrichtung nach einem der Ansprüche 10-14, **dadurch gekennzeichnet, dass** das Aufzeichnungsgerät ein Drucker, insbesondere ein Tintenstrahl-, Bubble-Jet-, Thermosublimations- oder Thermotransferdrucker ist.

## Claims

1. A process for recording image information onto recording material that is present in the form of individual sheets (Bₙ), wherein the image information (Sₙ) to be recorded for each sheet is present in a form stored electronically, pixel by pixel, and is recorded onto the recording material, pixel by pixel, wherein the sheets (Bₙ) of the recording material are transported through a recording station (110, 140) in at least two juxtaposed tracks (t₁, t₂) on a conveyor belt (113), and the stored image information (Sₙ) pertaining to the sheets (Bₙ) which are each located in the recording station is recorded onto the sheets (Bₙ) located in the juxtaposed tracks (t₁, t₂), **characterised in that** the sheets (Bₙ) on the at least two juxtaposed tracks (t₁, t₂) are supplied to the conveyor belt (113) temporally independently of one another.

2. Process according to Claim 1, **characterised in that** the recording of the image information (Sₙ) is effected in successive partial recording steps, wherein in the course of each partial recording step the image information (Sₙ) pertaining to strip-shaped subregions of the sheets (Bₙ) is recorded onto the sheets (Bₙ) located in the juxtaposed tracks, which strip-shaped subregions have substantially the same width, measured at right angles to the direction of transport of the sheets (Bₙ), as the respective sheets (Bₙ) and which subregions have an extent, measured in the direction of transport of the sheets, of the extent of at least one pixel.

3. Process according to Claim 2, **characterised in that** the sheets (Bₙ) located in the juxtaposed tracks in the recording station (110, 140) are transported onward by the length of the subregions after the partial recording steps or during the same.

4. Process according to Claim 3, **characterised in that** in each partial recording step in each instance line-type subregions with an extent, measured in the direction of transport, of the extent of a single pixel are recorded, the line-type subregions extending in a straight line (z).

5. Process according to one of Claims 2-4, **characterised in that** the recording of the image information onto the strip-shaped subregions of the sheets (Bₙ) located in the recording station (110, 140) in the juxtaposed tracks (t₁, t₂) is effected simultaneously or sequentially.

6. Process according to one of the preceding claims, **characterised in that** the sheet-like recording material is photographic material and **in that** the recording is effected by pixel-by-pixel exposure of the sheets (Bₙ).

7. Process according to Claim 6, **characterised in that** for the purpose of producing photographic copies of masters the latter are scanned photoelectrically, pixel by pixel, **in that** from the scanned values ascertained thereby exposure data (Sₙ) are calculated and stored, pixel by pixel, for each master, which exposure data constitute a digital representation of the copies to be created from the masters, and **in that** these stored exposure data in the form of image information are projected onto the individual sheets (Bₙ) of the photographic recording material.

8. Process according to Claim 7, **characterised in that** the sheets (Bₙ) of the photographic recording material have differing formats and are distributed onto the tracks (t₁, t₂) upstream of the recording station (110, 140) in such a way that they are located, depending on the width measured at right angles to the direction of transport, in one, two or more tracks (t₁, t₂).

9. Process according to Claim 8, **characterised in that** the sheets (Bₙ) of the photographic recording material are distributed onto the tracks (t₁, t₂) in such a way that the unoccupied empty space beside and between the individual sheets is minimal.

10. An apparatus for recording image information onto recording material that is present in the form of individual sheets (Bₙ), with a recording station (110, 140) in which the image information is recorded onto the sheets, with a transporting device (111-113) in order to transport the sheets (Bₙ) through the recording station (110, 140), with an image-information memory (S) in which the image information (Sₙ) to be recorded onto the sheets is present in a form stored electronically, pixel by pixel, for each individual sheet, with a recording instrument (140) located in the recording station, which reads the image information from the image-information memory (S) and records it onto the sheets of the recording material, wherein the transporting device (111-113) exhibits at least two juxtaposed tracks (t₁, t₂) and also a distributing device (123, 124) for the distributed arrangement of the sheets (Bₙ) on these tracks, and the recording instrument (140) reads the stored image information (Sₙ) in the assignment corresponding to the sheet arrangement in the tracks from the image-information memory (S) and applies the image information that has been read out onto all the sheets (Bₙ) located in the recording station (110, 140) in the juxtaposed tracks (t₁, t₂), **characterised in that** the sheets (Bₙ) on the at least two juxtaposed tracks are supplied to the transporting device (111-113) temporally independently of one another.

11. Apparatus according to Claim 10, **characterised in that** the recording instrument (110, 140) records the image information (Sₙ) onto the sheets in successive partial recording steps and in the process acts upon, in each instance, strip-shaped subregions of the sheets (Bₙ), which strip-shaped subregions have substantially the same width, measured at right angles to the direction of transport of the sheets (Bₙ), as the respective sheets (Bₙ) and which subregions have a length, measured in the direction of transport of the sheets, of the extent of at least one pixel, and wherein in the course of each partial recording step the recording instrument (110, 140) records the image information (Sₙ) pertaining to the strip-shaped subregions of the juxtaposed sheets (Bₙ) on the tracks onto the sheets (Bₙ) in question simultaneously or sequentially.

12. Apparatus according to Claim 11, **characterised in that** after the partial recording steps or during the same the transporting device (111-113) transports the sheets (Bₙ) located in the juxtaposed tracks (t₁, t₂) in the recording station (110, 140) onward by the length of the subregions.

13. Apparatus according to one of Claims 10-12, **characterised in that** the distributing device (123-124) distributes the sheets (Bₙ) of the recording material onto the tracks (t₁, t₂) of the transporting device (111-113) in such a way that the unoccupied empty space beside and between the individual sheets is minimal.

14. Apparatus according to one of Claims 10-13, **characterised in that** a scanner (200) for photoelectric scanning of masters, pixel by pixel, and also an image-information computer (300) are provided, which computer calculates image-information data (Sₙ), pixel by pixel, from the scanned values ascertained by the scanner for each master and stores said data in the image-information memory (S) in the form of a digital representation of copies to be created from the masters, and **in that** the recording instrument (140) for producing copies of the masters records these stored image-information data (Sₙ) in the form of image information onto the individual sheets (Bₙ) of the recording material.

15. Apparatus according to one of Claims 10-14, **characterised in that** the recording instrument is a photographic exposure instrument, in particular a photographic exposure instrument operating in line-by-line manner, especially a laser exposure instrument (140).

16. Apparatus according to one of Claims 10-14, **characterised in that** the recording instrument is a cathode-ray-tube exposure instrument or an exposure instrument with an array of light-emitting elements.

17. Apparatus according to one of Claims 10-14, **characterised in that** the recording instrument is a printer, in particular an ink-jet printer, a bubble-jet printer, a thermosublimation printer or a thermal-transfer printer.

## Revendications

1. Procédé destiné à l'enregistrement d'informations d'image sur du matériau d'enregistrement sous forme de feuilles individuelles (Bₙ), les informations d'image (Sₙ) à enregistrer existant pour chaque feuille à l'état d'éléments d'image mémorisés par voie électronique, et étant enregistrées par éléments d'image sur le matériau d'enregistrement, les feuilles (Bₙ) du matériau d'enregistrement étant transportées sur une bande transporteuse (113) à travers un poste d'enregistrement (110, 140) dans au moins deux pistes (t₁, t₂) situées l'une à côté de l'autre, et les informations d'image (Sₙ) mémorisées faisant partie des feuilles (Bₙ) se trouvant respectivement dans le poste d'enregistrement étant enregistrées sur les feuilles (Bₙ) se trouvant dans les pistes (t₁, t₂) situées l'une à côté de l'autre, **caractérisé en ce que** les feuilles (Bₙ) sur les, au moins deux, pistes (t₁, t₂) situées l'une à côté de l'autre sont amenées à la bande transporteuse (113) indépendamment les unes des autres dans le temps.

2. Procédé selon la revendication 1, **caractérisé en ce que** l'enregistrement des informations d'image (Sₙ) est effectué en phases successives d'enregistrement partiel, les informations d'image (Sₙ) faisant partie de zones partielles en forme de bandes des feuilles (Bₙ) étant enregistrées dans chaque phase d'enregistrement partiel sur les feuilles (Bₙ) se trouvant dans les pistes situées l'une à côté de l'autre, lesquelles zones partielles en forme de bandes ayant sensiblement la même largeur que les feuilles (Bₙ) respectives, mesurée transversalement au sens de transport des feuilles (Bₙ), et lesquelles zones partielles ayant une extension, mesurée dans le sens de transport des feuilles, qui correspond à l'extension d'au moins un élément d'image.

3. Procédé selon la revendication 2, **caractérisé en ce que**, après les phases d'enregistrement partiel ou pendant celles-ci, les feuilles (Bₙ) se trouvant dans les pistes situées l'une à côté de l'autre continuent à être transportées dans le poste d'enregistrement (110, 140), de la longueur des zones partielles.

4. Procédé selon la revendication 3, **caractérisé en ce que** des zones partielles linéaires avec une extension, mesurée dans le sens de transport, de l'extension d'un seul élément d'image sont respectivement enregistrées dans chaque phase d'enregistrement partiel, les zones partielles linéaires s'étendant dans une ligne droite (z).

5. Procédé selon l'une des revendications 2 à 4, **caractérisé en ce que** l'enregistrement des informations d'image sur les zones partielles en forme de bandes des feuilles (Bₙ) se trouvant dans les pistes (t₁, t₂) situées l'une à côté de l'autre est effectué simultanément ou de façon séquentielle dans le poste d'enregistrement (110, 140).

6. Procédé selon l'une des revendications précédentes, **caractérisé en ce que** le matériau d'enregistrement à l'état de feuilles est du matériau photographique, et **en ce que** l'enregistrement est effectué moyennant l'exposition des feuilles (Bₙ) par éléments d'image.

7. Procédé selon la revendication 6, **caractérisé en ce que**, pour l'établissement de copies photographiques d'originaux transparents, ces derniers sont balayés par éléments d'image par voie photoélectrique, **en ce qu'**à partir des valeurs de balayage déterminées, des données d'exposition (Sₙ) par éléments d'image sont calculées et mémorisées pour chaque original transparent, lesquelles données d'exposition sont une représentation numérique des copies à établir des originaux transparents, et **en ce que** les données d'exposition mémorisées sont projetées par réflexion en tant qu'informations d'image sur les feuilles individuelles (Bₙ) du matériau d'enregistrement photographique.

8. Procédé selon la revendication 7, **caractérisé en ce que** les feuilles (Bₙ) du matériau d'enregistrement photographiques sont de différents formats, et sont réparties en amont du poste d'enregistrement (110, 140) sur les pistes (t₁, t₂) de telle sorte que, en fonction de la largeur mesurée transversalement au sens de transport, elles se trouvent dans une, deux ou plusieurs pistes (t₁, t₂).

9. Procédé selon la revendication 8, **caractérisé en ce que** les feuilles (Bₙ) du matériau d'enregistrement photographique sont reparties sur les pistes (t₁, t₂) de telle sorte que l'espace vide non occupé à côté et entre les différentes feuilles soit minimal.

10. Dispositif destiné à l'enregistrement d'informations d'image sur du matériau d'enregistrement sous forme de feuilles individuelles (Bₙ), comportant un poste d'enregistrement (110, 140), dans lequel les informations d'image sont enregistrées sur les feuilles, un dispositif de transport (111 à 113) pour transporter les feuilles (Bₙ) à travers le poste d'enregistrement (110, 140), une mémoire (S) d'informations d'image, dans laquelle les informations d'image (Sₙ) à enregistrer sur les feuilles sont mémorisées par voie électronique et par éléments d'image pour chaque feuille individuelle, un appareil d'enregistrement (140) situé dans le poste d'enregistrement, lequel lit les informations d'image à partir de la mémoire (S) d'informations d'image et les enregistre sur les feuilles du matériau d'enregistrement, le dispositif de transport (111 à 113) comportant au moins deux pistes (t₁, t₂) situées l'une à côté de l'autre, ainsi qu'un dispositif de répartition (123, 124) pour la disposition répartie des feuilles (Bₙ) sur ces pistes, et l'appareil d'enregistrement (140) lisant les informations d'image (Sₙ) mémorisées à partir de la mémoire (S) d'informations d'image dans l'association correspondant à la disposition des feuilles dans les pistes, et enregistrant les informations d'image lues sur toutes les feuilles (Bₙ) se trouvant dans le poste d'enregistrement (110, 140) dans les pistes (t₁, t₂) situées l'une à côté de l'autre, **caractérisé en ce que** les feuilles (Bₙ) sur les, au moins deux, pistes situées l'une à côté de l'autre du dispositif de transport (111 à 113) sont amenées indépendamment les unes des autres dans le temps.

11. Dispositif selon la revendication 10, **caractérisé en ce que** l'appareil d'enregistrement (110, 140) enregistre les informations d'image (Sₙ) sur les feuilles (Bₙ) en phases successives d'enregistrement partiel, et enregistre en l'occurrence des zones partielles respectives en forme de bandes des feuilles (Bₙ), lesquelles zones partielles en forme de bandes ont sensiblement la même largeur que les feuilles (Bₙ) respectives, mesurée transversalement au sens de transport des feuilles (Bₙ), et lesquelles zones partielles ont une longueur, mesurée dans le sens de transport des feuilles, qui correspond à l'extension d'au moins un élément d'image, et l'appareil d'enregistrement (110, 140) enregistrant sur les feuilles (Bₙ) concernées, simultanément ou de façon séquentielle, dans chaque phase d'enregistrement partiel les informations d'image (Sₙ) faisant partie des zones partielles en forme de bandes des feuilles (Bₙ) situées les unes à côté des autres sur les pistes.

12. Dispositif selon la revendication 11, **caractérisé en ce que**, après les phases d'enregistrement partiel ou pendant celles-ci, le dispositif de transport (111 à 113) continue à transporter dans le poste d'enregistrement (110, 140) les feuilles (Bₙ) se trouvant dans les pistes (t₁, t₂) situées l'une à côté de l'autre, de la longueur des zones partielles.

13. Dispositif selon l'une des revendications 10 à 12, **caractérisé en ce que** le dispositif de répartition (123, 124) répartit les feuilles (Bₙ) du matériau d'enregistrement sur les pistes (t₁, t₂) du dispositif de transport (111 à 113) de telle sorte que l'espace vide non occupé à côté et entre les différentes feuilles soit minimal.

14. Dispositif selon l'une des revendications 10 à 13, **caractérisé en ce qu'**il est prévu un dispositif de balayage (200) pour le balayage photoélectrique par éléments d'image d'originaux transparents, ainsi qu'un ordinateur (300) d'informations d'image qui, à partir des valeurs de balayage déterminées par le dispositif de balayage, calcule des données d'informations d'image (Sₙ) par éléments d'image pour chaque original transparent, et les mémorise dans la mémoire (S) d'informations d'image en tant que représentation numérique de copies à établir des originaux transparents, et **en ce que**, pour l'établissement de copies des originaux transparents, l'appareil d'enregistrement (140) enregistre en tant qu'informations d'image ces données d'informations d'image (Sₙ) mémorisées sur les différentes feuilles (Bₙ) du matériau d'enregistrement.

15. Dispositif selon l'une des revendications 10 à 14, **caractérisé en ce que** l'appareil d'enregistrement est un appareil d'exposition photographique fonctionnant notamment par lignes, en particulier un appareil d'exposition à laser (140).

16. Dispositif selon l'une des revendications 10 à 14, **caractérisé en ce que** l'appareil d'enregistrement est un appareil d'exposition à tube cathodique ou un appareil d'exposition comportant un champ d'éléments électroluminescents.

17. Dispositif selon l'une des revendications 10 à 14, **caractérisé en ce que** l'appareil d'enregistrement est une imprimante, notamment une imprimante à jet d'encre, à bubble jet, à thermosublimation ou à thermotransfert.
